Europäisches Patentamt

**European Patent Office**

Office européen des brevets

(11) Veröffentlichungsnummer: **0 350 774**

**A1**

## (12) EUROPÄISCHE PATENTANMELDUNG

(21) Anmeldenummer: **89112258.2**

(22) Anmeldetag: **05.07.89**

(51) Int. Cl.4: **B23K 9/16**

(30) Priorität: **15.07.88 DE 3824041**

(43) Veröffentlichungstag der Anmeldung:
**17.01.90 Patentblatt 90/03**

(84) Benannte Vertragsstaaten:
**AT BE CH DE ES LI NL**

(71) Anmelder: **Linde Aktiengesellschaft**
**Abraham-Lincoln-Strasse 21**
**D-6200 Wiesbaden(DE)**

(72) Erfinder: **Danzer. Wolfgang, Dr. c/o Sociedade**
**de Gases e**
**Produtos Quimicos Sogas Produtos S.A.R.L.**
**P.O. Box 21121 P-1128 Lisboa(PT)**

(74) Vertreter: **Schaefer, Gerhard, Dr.**
**Linde Aktiengesellschaft Zentrale**
**Patentabteilung**
**D-8023 Höllriegelskreuth(DE)**

(54) **Verfahren zum Schweissen mit Schutzgas.**

(57) Die Erfindung betrifft ein Verfahren zum Schweißen mit Schutzgas. Zur Erzielung gleichbleibend hoher Schweißqualität wird vorgeschlagen, dem
Schutzgas eine Schwefelverbindung beizumengen.

EP 0 350 774 A1

## Verfahren zum Schweißen mit Schutzgas

Die Erfindung betrifft ein Verfahren zum Schweißen mit Schutzgas.

Derartige Verfahren wurden insbesondere unter den Namen WIG-Schweißen und MIG-Schweißen bekannt. Bei der ersten Schweißmethode dient Wolfram als Elektrode, bei der zweiten Metall. Beide Methoden verwenden Inertgas, meist Argon, als Schutzgas. Obwohl diese Schweißtechniken inzwischen als weitgehend ausgereift gelten, ergaben sich besonders in jüngster Zeit in der Praxis Probleme, insbesondere beim Schweißen von Stahl. Schweißparameter, mit denen über längere Zeit hinweg fehlerfrei geschweißt werden konnte, führten plötzlich zu extrem breiten Nähten mit mangelhafter Durchschweißung. Selbst ein Anheben des Schweißstroms führte nicht zu einer tieferen, sondern zu einer breiteren Naht. Offenbar versagen die bisherigen Schweißmethoden bei verschiedenen Chargen desselben Werkstoffs. Dabei besteht bisher keine Möglichkeit, eine gut schweißbare Charge von einer unbrauchbaren zu unterscheiden.

Der vorliegenden Erfindung liegt daher die Aufgabe zugrunde, ein Verfahren der eingangs genannten Art so auszugestalten, daß eine gleichbleibend hohe Schweißqualität erreicht wird.

Diese Aufgabe wird erfindungsgemäß dadurch gelöst, daß dem Schutzgas eine Schwefelverbindung beigemengt wird.

Es hat sich überraschenderweise gezeigt, daß durch Zugabe einer Schwefelverbindung zum Schutzgas auch beim Schweißen von Werkstoffen, die ansonsten eine mangelhafte Durchschweißung zeigen, eine tiefe Schweißnaht erreicht werden kann.

Der Erfindung liegt dabei die Erkenntnis zugrunde, daß in manchen Werkstoffen übliche Stahlbegleiter, wie z. B. Schwefel, Aluminium und Kalzium, fehlen. Eine Ursache dafür dürften neue Stahlherstellungsmethoden (z.B. AOD) sein, die zu immer reineren Stählen führen. Gerade diese Stahlbegleiter beeinflussen aber das Einbrandverhalten beim Schweißen ohne Zusatzdraht entscheidend.

Metallurgisch ist dafür wahrscheinlich folgendes Phänomen verantwortlich:

Bei Anwesenheit einer bestimmten Mindestkonzentration von Schwefel im Werkstoff dreht sich das Schmelzbad vom heißen Lichtbogenansatz in die Tiefe. Ohne Schwefel im Werkstoff dreht sich das Schmelzbad vom heißen Lichtbogenansatz zum Schmelzbadrand, wodurch nur eine breite, flache Schweißnaht entsteht.

Durch die erfindungsgemäße Zugabe einer Schwefelverbindung zum Schutzgas wird ständig eine gewisse Menge an Schwefel in das Schmelzbad eingebracht. Dadurch wird das Fehlen von Schwefel im Werkstoff bei bestimmten Chargen ausgeglichen und eine gleichbleibend hohe Schweißqualität garantiert.

Es hat sich dabei als vorteilhaft erwiesen, Schwefelhexafluorid ($SF_6$) dem Schutzgas beizumengen. Außerdem ist es günstig, als Schutzgas Argon zu verwenden.

Bevorzugterweise wird dem Schutzgas die Schwefelverbindung in einer Menge zugegeben, die ausreicht, um im Schmelzbad einen Schwefelpegel von ca. 50 bis ca. 100 ppm aufrechtzuerhalten.

In einer bevorzugten Ausführungsform wird dem Schutzgas, das vorteilhafterweise aus Argon besteht, mindestens 0,1 Gew.% Schwefelhexafluorid ($SF_6$) beigemengt.

Durch Zugabe der Schwefelverbindung zum Schutzgas wird außerdem der Lichtbogen steifer und konzentriert die Lichtobenenergie in die Tiefe des Schmelzbades, so daß sich ein fokusierender Effekt einstellt. Weiterhin wird der Schwefel nur dort freigesetzt, wo es heiß ist und er gebraucht wird, d.h. im Lichtbogen und im Schmelzbad.

Vorteilhafterweise wird ein Argon-$SF_6$-Gemisch als Schutzgas verwendet. Dort, wo das Gemisch nur als Schutzgasmantel wirkt, entweicht das $SF_6$ als ungiftiges, neutrales Gas und zersetzt sich nicht.

Im folgenden sei die Erfindung anhand eines Ausführungsbeispiels und anhand von Figuren näher erläutert.

Die Figuren zeigen:

Figur 1 einen Querschnitt durch ein schwefelfreies Stahlstück beim Schweißen mit herkömmlicher Schutzgasatmosphäre,

Figur 2 einen Querschnitt durch ein schwefelfreies Stahlstück beim Schweißen mit der erfindungsgemäßen Schutzgasatmosphäre.

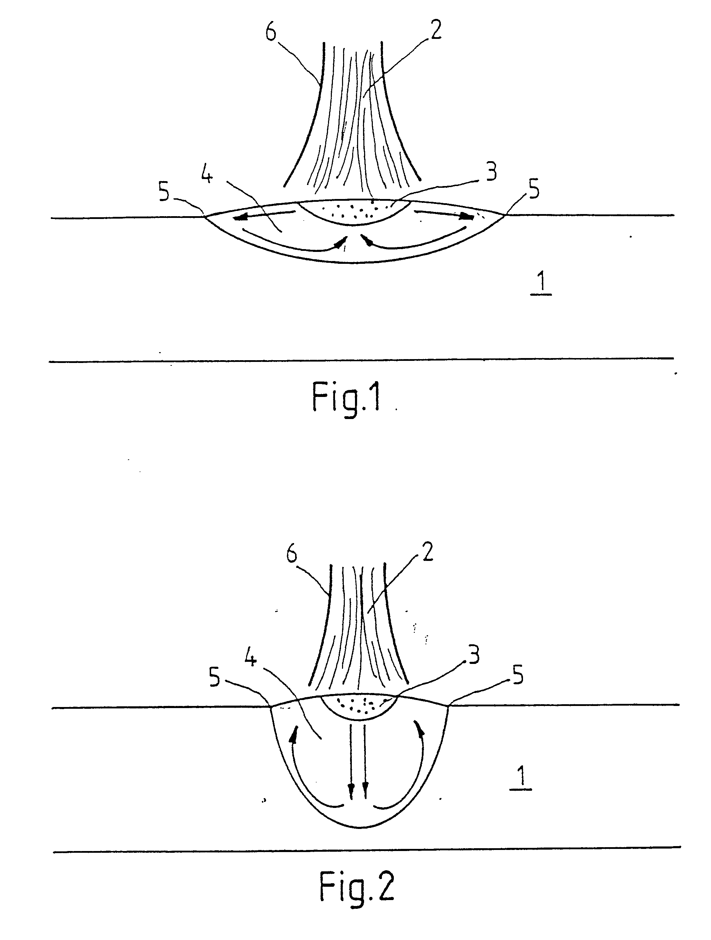

In Figur 1 ist ein schwefelfreies Stahlstück 1 im Querschnitt gezeigt. Der Lichtbogen 2 erzeugte im Schmelzbad 4 eine heiße Zone, den Lichtbogenansatz 3. Von diesem Lichtbogenansatz 3 dreht sich das Schmelzbad 4 in Pfeilrichtung zu den Schmelzbadrändern 5. Es ergibt sich so eine breite, flache Schweißnaht, die von den Schmelzbadrändern 5 begrenzt ist.

Dagegen zeigt Figur 2 dasselbe, an sich schwefelfreie, Stahlstück 1 beim Schweißen mit der erfindungsgemäßen Methode. Über das Schutzgas 6 wird Schwefel in Form von $SF_6$ in das Schmelzbad 4 eingetragen. Daher dreht sich das Schmelzbad 4 vom heißen Lichtbogenansatz 3 in Pfeilrichtung in die Tiefe, so daß eine tiefe, schmale Schweißnaht entsteht, die durch die Schmelzbadränder 5 begrenzt ist. Es wird ei ne gute Durchschweißung des Stahlstücks 1 erzielt.

Im vorliegenden Ausführungsbeispiel wird als Schutzgas Argon verwendet, dem 1 Gew.% $SF_6$ beigemengt wird. Auf diese Weise wird im Schmelzbad 4 ein Schwefelpegel von ca. 70 ppm aufrechterhalten. Diese Mengen reichen aus, um ein gleichbleibend gutes Schweißverhalten auch bei Stahlchargen mit schwankenden Konzentrationen an Stahlbegleitern sicherzustellen.

## Ansprüche

1. Verfahren zum Schweißen mit Schutzgas, dadurch gekennzeichnet, daß dem Schutzgas eine Schwefelverbindung beigemengt wird.

2. Verfahren nach Anspruch 1, dadurch gekennzeichnet, daß als Schwefelverbindung Schwefelhexafluorid verwendet wird.

3. Verfahren nach Anspruch 1 oder 2, dadurch gekennzeichnet, daß als Schutzgas Argon verwendet wird.

4. Verfahren nach einem der Ansprüche 1 bis 3, dadurch gekennzeichnet, daß dem Schutzgas die Schwefelverbindung in einer Menge zugegeben wird, die ausreicht, um im Schmelzbad einen Schwefelpegel von ca. 50 bis ca. 100 ppm aufrechtzuerhalten.

5. Verfahren nach einem der Ansprüche 1 bis 4, dadurch gekennzeichnet, daß dem Schutzgas mindestens 0,1 Gew.% Schwefelhexafluorid beigemengt wird.

Fig.1

Fig.2

| EINSCHLÄGIGE DOKUMENTE | | | EP 89112258.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.X) 5 |
| X | <u>GB - A - 1 460 140</u><br>(BOC)<br>* Ansprüche *<br>---- | 1-5 | B 23 K 9/16 |

RECHERCHIERTE SACHGEBIETE (Int. Cl.X) 5

B 23 K 9/00

Der vorliegende Recherchenbericht wurde für alle Patentansprüche erstellt.

| Recherchenort | Abschlußdatum der Recherche | Prüfer |
|---|---|---|
| WIEN | 02-10-1989 | BENCZE |